# EUROPEAN PATENT APPLICATION

(11) **EP 4 621 871 A1**
(43) Date of publication of application: **24.09.2025**
(21) Application number: 23794867.4
(22) Date of filing: 21.03.2023
(51) Int. Cl.: H01M 4/36, H01M 4/505, H01M 4/525, H01M 4/485

(54) **MODIFIED TERNARY AND LITHIUM MANGANESE IRON PHOSPHATE COMPOSITE MATERIAL, PREPARATION METHOD THEREFOR, AND APPLICATION THEREOF**

(30) Priority: 21.12.2022 CN 202211651669
(71) Applicant: Eve Power Co., Ltd., Jingmen, Hubei 448000 (CN)
(72) Inventor: WU, Tingting, Jingmen, Hubei 448000 (CN); ZHANG, Lin, Jingmen, Hubei 448000 (CN); YUAN, Dingding, Jingmen, Hubei 448000 (CN)
(74) Representative: Herrero & Asociados, S.L.
(86) International application number: PCT/CN2023/082824
(87) International publication number: WO 2023/207432

(57) **Abstract**

A modified ternary and lithium manganese iron phosphate composite material and a preparation method and an application thereof. The material includes a modified ternary material and a modified lithium manganese iron phosphate material that are composite; wherein the modified ternary material includes a ternary material, a ternary material double-layer cladding layer, and ternary material doped metal ions; the ternary material double-layer cladding layer includes a ternary material metal oxide layer and a ternary material cationic cladding layer; the modified lithium manganese iron phosphate material includes a lithium manganese iron phosphate material, a lithium manganese iron phosphate double-layer cladding layer, and lithium manganese iron phosphate doped metal ions; the lithium manganese iron phosphate double-layer cladding layer includes a lithium manganese iron phosphate metal oxide layer and a lithium manganese iron phosphate cationic cladding layer.

## Description

### THEREOF

The present disclosure claims priority of China Patent Application No. 202211651669.8, filed on December 21, 2022, the entire disclosures of which are incorporated herein by reference.

### TECHNICAL FIELD

The present disclosure belongs to the technical field of lithium-ion battery cathode material manufacturing, and relates to a modified ternary and lithium manganese iron phosphate composite material and a preparation method and an application thereof.

### BACKGROUND

With the increasingly serious social development and environmental pollution problems, the development of new energy sources is receiving more and more attention, and lithium-ion batteries have become one of the research hotspots for researchers in recent years. Lithium-ion battery has the advantages of high voltage, high energy density, long cycle life, no memory effect, environmental friendliness, etc.

Lithium manganese iron phosphate is a new type of phosphate lithium-ion battery cathode material formed by doping a certain proportion of manganese on the basis of lithium iron phosphate. Lithium manganese iron phosphate maintains the olivine-type stable structure of lithium iron phosphate, which is more stable during the charging and discharging process, and even if all lithium ions migrate out in the charging process, no structural collapse will occur. Therefore, this material has better safety and lower cost. Compared with ternary materials, the advantages of applications of pure lithium manganese iron phosphate are lower cost and higher safety performance, with the main limitations being low conductivity and low energy density. The advantage of ternary battery application and new energy field is high energy density, but its safety performance is poor, such that it is difficult to pass the safety test such as pinprick, impact, etc., and a more perfect battery management system is required for controlling; in addition, with the rise of nickel price and cobalt price, the cost of ternary battery is also higher.

CN 104300123A discloses a hybrid cathode material, a cathode sheet using the cathode material, and a lithium-ion battery, the hybrid cathode material including the following components by weight: 50∼90 parts of nickel-cobalt-manganese ternary material, 10∼50 parts of lithium manganese iron phosphate, with an energy density of 170 Wh/kg.

CN 105449269A discloses a lithium-ion battery, including a cathode sheet, an anode sheet, a diaphragm, and an electrolyte. The cathode sheet is coated with a cathode slurry, the cathode slurry including a cathode active substance, where the cathode active substance includes lithium iron phosphate, a ternary material, and lithium manganese-iron-phosphate; the ternary material has the general formula of LiNiₓCo_{y}Mn_{1-x-y}O₂, where 0 <x<1, 0<y<1, 0<x+y<1. The mass ratio of the lithium iron phosphate, ternary material, and lithium manganese iron phosphate is: 10~60:10~50:10~50. The cathode slurry further includes an electrically conductive agent, the electrically conductive agent being a carbon nanotube.

CN 106058245A discloses a low-temperature lithium-ion battery, including a cathode, an anode, and an electrolyte; the cathode active substance used for the cathode is lithium nickel cobalt manganese oxide ternary material doped with lithium manganese iron phosphate, where the doping mass percentage of lithium manganese iron phosphate in the cathode active substance is 5% to 30%; the anode active substance used for the anode is a graphite or a carbon-covered graphite material; and the organic solvent used for the electrolyte is a mixed system of vinyl carbonate, methyl ethyl carbonate, diethyl carbonate, and propylene carbonate, and the concentration of lithium ions in the electrolyte is 0.9-1.3 mol/L.

However, in order to balance the performance and safety, a variety of materials are mixed, which brings the problem of how to ensure the structure and thermal stability of the mixed cathode materials.

### SUMMARY OF THE DISCLOSURE

In view of the problems in the related art, the present disclosure provides a modified ternary and lithium manganese iron phosphate composite material and a preparation method and application thereof, where the ternary material and lithium manganese iron phosphate material can contribute to a cathode material that takes into account the energy density and long-cycle performance; both the ternary material and the lithium manganese iron phosphate are modified by doping and cladding, which can make use of the synergistic effect of the doping and cladding to optimize the long-cycle performance of the cathode material.

To achieve above, the following technical solutions are adopted.

In a first aspect, a modified ternary and lithium manganese iron phosphate composite material, comprising a modified ternary material and a modified lithium manganese iron phosphate material that are composite;
wherein the modified ternary material comprises a ternary material, a ternary material double-layer cladding layer, and ternary material doped metal ions; the ternary material double-layer cladding layer comprises a ternary material metal oxide layer and a ternary material cationic cladding layer;
the modified lithium manganese iron phosphate material comprises a lithium manganese iron phosphate material, a lithium manganese iron phosphate double-layer cladding layer, and lithium manganese iron phosphate doped metal ions; the lithium manganese iron phosphate double-layer cladding layer comprises a lithium manganese iron phosphate metal oxide layer and a lithium manganese iron phosphate cationic cladding layer.

The composite ternary material and lithium manganese iron phosphate material in the present disclosure can contribute to cathode materials that take into account the energy density and safety performance, the ternary material and lithium manganese iron phosphate are doped and cladded for modification, and the synergistic effect of doping and cladding can be utilized to optimize the long-cycle performance of the cathode materials; the synergistic effect between the cationic cladding layer formed in-situ in the double-layer cladding layer and doped metal can inhibit the occurrence of the phase transition, thus maintaining the integrity and stability of the microstructure of the material, and the metal oxide layer of the double-layer cladding layer is conducive to the reduction of the interfacial side reaction, thus further enhancing the long-cycle performance of the material.

In some embodiments, a composite mass ratio of the modified ternary material and the modified lithium manganese iron phosphate material is (0~1):1 and is not zero; for example, it may be 0.2:1, 0.4:1, 0.5:1, 0.8:1, or 0.9:1, but it is not limited to the enumerated values, and other values within the numerical ranges that are not enumerated are equally applicable.

In some embodiments, a median particle size of the modified ternary and lithium manganese iron phosphate composite material is 2~15 µm, which may be, for example, 2 µm, 5 µm, 10 µm, 12 µm, or 15 µm, but is not limited to the enumerated values, and other values within the numerical ranges that are not enumerated are equally applicable.

In some embodiments, a material of the ternary material metal oxide layer comprises titanium dioxide.

In some embodiments, a material of the ternary material cationic cladding layer comprises lithium titanate.

In some embodiments, the ternary material doped metal ions are titanium ions.

In some embodiments, a thickness of the ternary material double-layer cladding layer is 6~10 nm; for example, it may be 6 nm, 7 nm, 8 nm, 9 nm, or 10 nm, but it is not limited to the enumerated values, and other values within the numerical ranges that are not enumerated are equally applicable.

The modified ternary material provided by the present disclosure has a highly stable hybridized surface structure, the hybridized surface structure including a titanium dioxide and lithium titanate cladding layer and surface titanium doping of divalent titanium ions, which enhances the structural stability of the material and eliminates lithium impurities on the surface of the material.

In the structure of the modified ternary material with double-layer cladding titanium and doped titanium, the reversible phase transition of the material is inhibited by the synergistic effect of the doped titanium and the lithium titanate cationic cladding layer formed in-situ, which maintains the integrity of the microstructure of the material. The electrochemically stabilized titanium dioxide cladding layer can effectively protect the direct contact between the cathode material and the electrolyte, effectively inhibiting the occurrence of direct side reactions; the presence of the lithium titanate cationic cladding layer not only consumes the residual lithium on the surface of the material, but also facilitates lithium ion transport to a certain extent due to the three-dimensional lithium ion transport channel of lithium titanate, which effectively enhances the capacity of the material.

In the present disclosure, the tightly bonded titanium dioxide and lithium titanate cladding layer in the double-layer cladding layer can effectively avoid the cladding layer from falling off from the surface of the material during a long cycling process, so as to maintain the interfacial stability and structural stability of the material and significantly improve the cycling performance of the material.

In some embodiments, a material of the lithium manganese iron phosphate metal oxide layer comprises titanium dioxide.

In some embodiments, a material of the lithium manganese iron phosphate cationic cladding layer comprises lithium titanate.

In some embodiments, the lithium manganese iron phosphate doped metal ions are titanium ions.

In some embodiments, a thickness of the lithium manganese iron phosphate double-layer cladding layer is 6~10 nm; for example, it may be 6 nm, 7 nm, 8 nm, 9 nm, or 10 nm, but it is not limited to the enumerated values, and other values within the numerical ranges that are not enumerated are equally applicable.

The modified lithium manganese iron phosphate material provided by the present disclosure has a highly stable hybridized surface structure, the hybridized surface structure including a titanium dioxide and lithium titanate cladding layer and surface titanium doping of divalent titanium ions, which enhances the structural stability of the material and eliminates lithium impurities on the surface of the material.

The surface doped titanium induces the lithium titanate cationic cladding layer, thereby inhibiting the migration of transition metal ions, inhibiting reversible phase transitions, and enhancing the structural stability of the material; the lithium titanate cladding layer with a three-dimensional channel facilitates ion transport, and the electrochemically stabilized titanium dioxide cladding layer inhibits side reactions and enhances interfacial stability, and thermal stability is improved by suppressing the phase transition and the orderly arrangement of nickel ions in the lithium layer.

In a second aspect, a method for preparing the modified ternary and lithium manganese iron phosphate composite material in the first aspect, comprising:
providing the modified ternary material and the modified lithium manganese iron phosphate material; and
mixing the modified ternary material and the modified lithium manganese iron phosphate material to obtain the modified ternary and lithium manganese iron phosphate composite material.

In some embodiments, a preparation method of the modified ternary material comprises:
mixing a ternary precursor, a lithium source, and a titanium source, and sintering to obtain the modified ternary material.

In some embodiments, a molar ratio of Ni:Co:Mn in the ternary precursor is 1:1:1-9.5:0.25:0.25, which may be, for example, 1:1:1, 5:2:3, 7:1:2, 8:1:1, or 9.5:0.25:0.25, but is not limited to the enumerated values, and other values within the numerical ranges that are not enumerated are equally applicable.

In some embodiments, the lithium source comprises any one or a combination of at least two of lithium hydroxide, lithium carbonate, lithium nitrate, or lithium acetate; exemplary, but not limiting, the combinations include a combination of lithium hydroxide and lithium carbonate, a combination of lithium carbonate and lithium nitrate, a combination of lithium nitrate and lithium acetate, a combination of lithium hydroxide, lithium carbonate, and lithium nitrate, or a combination of lithium carbonate, lithium nitrate, and lithium acetate.

In some embodiments, the titanium source comprises titanium trioxide.

The preparation method of the present disclosure adds a small amount of titanium trioxide during the preparation of the ternary material, realizing the overall structural modification from the surface of the material to the interior of the material, and realizing the combination of titanium doping with the surface titanium dioxide and lithium titanate hybridized cladding layer in the ternary material by a one-step mixing and sintering method.

In some embodiments, a mass of the titanium source is 1~4 wt% of a mass of the ternary precursor, which may be, for example, 1 wt%, 1.5 wt%, 2 wt%, 3 wt%, or 4 wt%, but is not limited to the enumerated values, and other values within the numerical ranges that are not enumerated are equally applicable.

In some embodiments, a temperature of the sintering is 750~950°C, which may be, for example, 750°C, 800°C, 850°C, 900°C, or 950°C, but is not limited to the values listed, and other values within the numerical ranges that are not enumerated are equally applicable.

In some embodiments, a duration of the sintering is 10~15h.

In some embodiments, the sintering is further followed by treatments of roller, jaw breaker, crushing, and demagnetization.

In some embodiments, a preparation method of the modified lithium manganese iron phosphate material comprises:

mixing a lithium manganese iron phosphate precursor, a lithium source, and a titanium source, spray drying and granulating, calcining under a protective atmosphere, and obtaining the modified lithium manganese iron phosphate material.

In some embodiments, the titanium source comprises titanium trioxide.

The preparation method of the present disclosure adds a small amount of titanium trioxide during the preparation of the lithium manganese iron phosphate material, realizing the overall structural modification from the surface of the material to the interior of the material, and realizing the combination of titanium doping with the surface titanium dioxide and lithium titanate hybridized cladding layer in the lithium manganese iron phosphate material by a one-step mixing and sintering method.

In some embodiments, a mass of the titanium source is 1~4 wt% of a mass of the lithium manganese iron phosphate precursor, which may be, for example, 1 wt%, 1.5 wt%, 2 wt%, 3 wt%, or 4 wt%, but is not limited to the enumerated values, and other values within the numerical ranges that are not enumerated are equally applicable.

In some embodiments, the protective atmosphere is an inert gas atmosphere.

In some embodiments, a temperature of the calcining is 700~800°C, which may be, for example, 700°C, 720°C, 740°C, 760°C, 780°C, or 800°C, but is not limited to the values listed, and other values within the numerical ranges that are not enumerated are equally applicable.

In some embodiments, a duration of the calcining is 8∼10h, which may be 8h, 8.5h, 9h, 9.5h or 10h, but is not limited to the values listed, and other values within the numerical ranges that are not enumerated are equally applicable.

In some embodiments, the calcining is further followed by treatments of crushing, sieving, and demagnetizing.

In some embodiments, a median particle size of the modified ternary material is 5~20 µm, which may be, for example, 5 µm, 8 µm, 10 µm, 15 µm, or 20 µm, but is not limited to the enumerated values, and other values within the numerical ranges that are not enumerated are equally applicable.

In some embodiments, a median particle size of the modified lithium manganese iron phosphate material is 1~5 µm, which may be, for example, 1 µm, 2 µm, 3 µm, 4 µm, or 5 µm, but is not limited to the enumerated values, and other values within the numerical ranges that are not enumerated are equally applicable.

In some embodiments, the mixing comprises high-energy ball milling

In some embodiments, a ball material ratio of the high-energy ball milling is (10~20):1, which may be, for example, 10:1, 12:1, 15:1, 18:1, or 20:1, but is not limited to the enumerated values, and other values within the numerical ranges that are not enumerated are equally applicable.

In some embodiments, a rotational speed of the high-energy ball milling is 1500~2000rpm, which may be, for example, 1500 rpm, 1600 rpm, 1700 rpm, 1800 rpm, or 2000 rpm, but is not limited to the enumerated values, and other values within the numerical ranges that are not enumerated are equally applicable.

In some embodiments, a duration of the high-energy ball milling is 1~2h, which may be, for example, 1h, 1.2h, 1.5h, 1.8h, or 2h, but is not limited to the values listed, and other values within the numerical ranges that are not enumerated are equally applicable.

In some embodiments, a mass ratio of the modified ternary material and the modified lithium manganese iron phosphate material is (0~1):1 and is not 0; for example, it may be 0.2:1, 0.4:1, 0.5:1, 0.8:1, or 0.9:1, but it is not limited to the enumerated values, and other values within the numerical ranges that are not enumerated are equally applicable.

As an implementation of the second aspect, the method comprises:
mixing a ternary precursor, a lithium source, and titanium trioxide of 1~4wt% by mass of the ternary precursor, sintering at 750~950°C for 10~15h, and obtaining the modified ternary material after treatments of roller, jaw breaking, crushing, and demagnetization;
mixing a lithium manganese iron phosphate precursor, a lithium source, and titanium trioxide of 1-4wt% by mass of the lithium manganese iron phosphate precursor, spray drying and granulating, calcining at 700~800°C for 8~10h under inert gas atmosphere, and obtaining the modified lithium manganese iron phosphate material after treatments of crushing, sieving, and demagnetizing; and
mixing the modified ternary material and the modified lithium manganese iron phosphate material in a mass ratio of (0~1):1 and not 0, performing a high-energy ball milling with a ball material ratio of (10~20):1 and at a rotational speed of 1500∼2000 rpm for 1~2h to obtain the modified ternary and lithium manganese iron phosphate composite material.

In a third aspect, a cathode sheet, comprising the modified ternary and lithium manganese iron phosphate composite material in the first aspect.

In a fourth aspect, a battery, comprising the modified ternary and lithium manganese iron phosphate composite material in the first aspect or the cathode sheet in the third aspect.

By the above technical solutions, the beneficial effects of the present invention are as follows.

The composite ternary material and lithium manganese iron phosphate material in the present disclosure can contribute to cathode materials that take into account the energy density and safety performance, the ternary material and lithium manganese iron phosphate are doped and cladded for modification, and the synergistic effect of doping and cladding can be utilized to optimize the long-cycle performance of the cathode materials; the synergistic effect between the cationic cladding layer formed in-situ in the double-layer cladding layer and doped metal can inhibit the occurrence of the phase transition, thus maintaining the integrity and stability of the microstructure of the material, and the metal oxide layer of the double-layer cladding layer is conducive to the reduction of the interfacial side reaction, thus further enhancing the long-cycle performance of the material.

### BRIEF DESCRIPTION OF THE DRAWINGS

FIG. 1 is a scanning electron micrograph diagram of a modified ternary material in Embodiment 1.
FIG. 2 is a scanning electron microscope diagram of a modified lithium manganese iron phosphate material in Embodiment 1.
FIG. 3 is a scanning electron microscope diagram of a modified ternary and lithium manganese iron phosphate composite material in Embodiment 1.
FIG. 4 is an XRD comparison diagram in Embodiment 1.

### DETAILED DESCRIPTION

The technical solutions of the present disclosure are further described below in conjunction with the accompanying drawings and by way of specific embodiments. However, the following embodiments are only simple examples of the present disclosure and do not represent or limit the scope of the present disclosure, which is subject to the claims.

### Embodiment 1

The embodiment provides a modified ternary and lithium manganese iron phosphate composite material, including a modified ternary material and a modified lithium manganese iron phosphate material that are composite with a mass ratio of 3:7, with a median particle size of 10 µm.

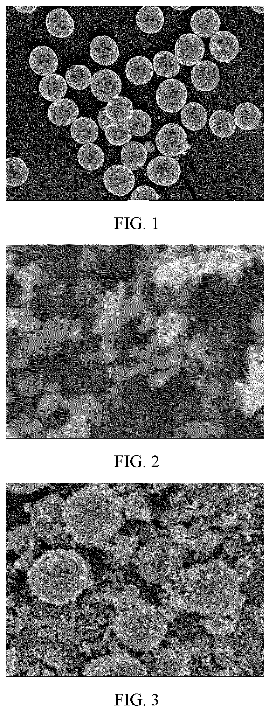

The modified ternary material (with a scanning electron microscope diagram as shown in FIG. 1) includes an NCM523 ternary material, a ternary material double-layer cladding layer, and doped titanium dioxide; the ternary material double-layer cladding layer has a thickness of 8 nm and includes a titanium dioxide layer and a lithium titanate cationic cladding layer; the modified ternary material has a median particle size of 10 µm.

The modified lithium manganese iron phosphate material (with a scanning electron microscope diagram as shown in FIG. 2) includes a lithium manganese iron phosphate material, a lithium manganese iron phosphate double-layer cladding layer, and doped titanium trioxide; the lithium manganese iron phosphate double-layer cladding layer has a thickness of 8 nm and includes a titanium dioxide layer and a lithium titanate cationic cladding layer; the modified lithium manganese iron phosphate material has a median particle size of 2.5 µm.

The modified ternary and lithium manganese iron phosphate composite material is obtained by the following preparation method.

Mixing an NCM523 ternary precursor, lithium hydroxide, and titanium trioxide of 2.5 wt% by mass of the ternary precursor; sintering at 800°C for 12h; and obtaining the modified ternary material after treatments of roller, jaw breaking, crushing, and demagnetization.

Mixing a lithium manganese iron phosphate precursor, lithium hydroxide, and titanium trioxide of 2.5 wt% by mass of the lithium manganese iron phosphate precursor, spray drying and granulating, calcining at 750°C for 9h under argon gas atmosphere; and obtaining the modified lithium manganese iron phosphate material after treatments of crushing, sieving, and demagnetizing.

Mixing the modified ternary material and the modified lithium manganese iron phosphate material in a mass ratio of 3:7, performing high-energy ball milling for 1.5h at a ball-to-material ratio of 15:1 and a rotational speed of 1800rpm, and obtaining the modified ternary and lithium manganese iron phosphate composite material (with a scanning electron microscopy diagram as shown in FIG. 3).

EDS elemental testing of the resulting modified ternary and lithium manganese iron phosphate composite material shows that Ti element is uniformly distributed in the bulk phase of the material, indicating the presence of titanium doping.

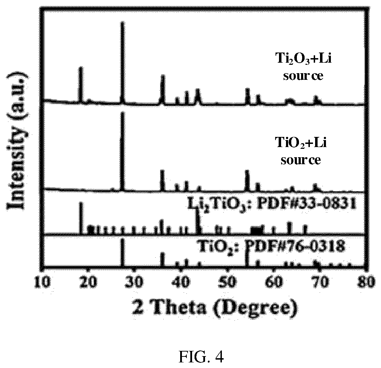

Pure TiO₂ and Ti₂O₃ are mixed with a lithium source, respectively, and sintered for the same amount of time under the experimental conditions of Embodiment. As shown in FIG. 4, the XRD test result of mixing and sintering TiO₂ with the lithium source corresponds to the pure phase TiO₂; the XRD test result of mixing and sintering Ti₂O₃ with the lithium source corresponds to the mixing of Li₂TiO₃ and TiO₂, indicating that the double-layer cladding layer is composed of TiO₂ and Li₂TiO₃.

### Embodiment 2

The embodiment provides a modified ternary and lithium manganese iron phosphate composite material, including a modified ternary material and a modified lithium manganese iron phosphate material that are composite with a mass ratio of 1:1, with a median particle size of 2 µm.

The modified ternary material includes an NCM523 ternary material, a ternary material double-layer cladding layer, and doped titanium trioxide; the ternary material double-layer cladding layer has a thickness of 6 nm and includes a titanium dioxide layer and a lithium titanate cationic cladding layer; the modified ternary material has a median particle size of 5 µm.

The modified lithium manganese iron phosphate material includes a lithium manganese iron phosphate material, a lithium manganese iron phosphate double-layer cladding layer, and doped titanium trioxide; the lithium manganese iron phosphate double-layer cladding layer has a thickness of 6 nm and includes a titanium dioxide layer and a lithium titanate cationic cladding layer; the modified lithium manganese iron phosphate material has a median particle size of 1 µm.

The modified ternary and lithium manganese iron phosphate composite material is obtained by the following preparation method.

Mixing an NCM523 ternary precursor, lithium carbonate, and titanium trioxide of 1 wt% by mass of the ternary precursor; sintering at 750°C for 15h; and obtaining the modified ternary material after treatments of roller, jaw breaking, crushing, and demagnetization.

Mixing a lithium manganese iron phosphate precursor, lithium carbonate, and titanium trioxide of 1 wt% by mass of lithium manganese iron phosphate precursor, spray drying and then granulating, calcining at 700°C for 10h under inert gas atmosphere; and obtaining the modified lithium manganese iron phosphate material after treatments of crushing, sieving, and demagnetizing.

Mixing the modified ternary material and the modified lithium manganese iron phosphate material in a mass ratio of 1:1, performing high-energy ball milling for 1h at a ball-to-material ratio of 10:1 and a rotational speed of 2000rpm, and obtaining the modified ternary and lithium manganese iron phosphate composite material.

### Embodiment 3

The embodiment provides a modified ternary and lithium manganese iron phosphate composite material, including a modified ternary material and a modified lithium manganese iron phosphate material that are composite with a mass ratio of 2:8, with a median particle size of 15 µm.

The modified ternary material includes an NCM523 ternary material, a ternary material double-layer cladding layer, and doped titanium trioxide; the ternary material double-layer cladding layer has a thickness of 10 nm and includes a titanium dioxide layer and a lithium titanate cationic cladding layer; the modified ternary material has a median particle size of 20 µm.

The modified lithium manganese iron phosphate material includes a lithium manganese iron phosphate material, a lithium manganese iron phosphate double-layer cladding layer, and doped titanium trioxide; the lithium manganese iron phosphate double-layer cladding layer has a thickness of 10 nm and includes a titanium dioxide layer and a lithium titanate cationic casing layer; the modified lithium manganese iron phosphate material has a median particle size of 5 µm.

The modified ternary and lithium manganese iron phosphate composite material is obtained by the following preparation method.

Mixing an NCM523 ternary precursor, lithium nitrate, and titanium trioxide of 4 wt% by mass of the ternary precursor; sintering at 950°C for 10h; and obtaining the modified ternary material after treatments of roller, jaw breaking, crushing, and demagnetization.

Mixing a lithium manganese iron phosphate precursor, lithium nitrate, and titanium trioxide of 4wt% by mass of lithium manganese iron phosphate precursor, spray drying and then granulating, calcining at 800°C for 8h under inert gas atmosphere; and obtaining the modified lithium manganese iron phosphate material after treatments of crushing, sieving, and demagnetizing.

Mixing the modified ternary material and the modified lithium manganese iron phosphate material in a mass ratio of 2:8, performing high-energy ball milling for 2h at a ball-to-material ratio of 20:1 and a rotational speed of 1500rpm, and obtaining the modified ternary and lithium manganese iron phosphate composite material.

### Embodiment 4

The embodiment provides a ternary and lithium manganese iron phosphate composite material, and the difference with Embodiment 1 is that the composite mass ratio of the modified ternary material and the modified lithium manganese iron phosphate material is 2:1.

### Embodiment 5

The embodiment provides a ternary and lithium manganese iron phosphate composite material, and the difference with Embodiment 1 is that titanium trioxide is replaced with titanium dioxide of equal mass in the preparation method of the modified ternary material.

### Embodiment 6

The embodiment provides a ternary and lithium manganese iron phosphate composite material, and the difference with Embodiment 1 is that the addition amount of titanium trioxide in the preparation method of the modified ternary material is 0.5 wt%.

### Embodiment 7

The embodiment provides a ternary and lithium manganese iron phosphate composite material, and the difference with Embodiment 1 is that the addition amount of titanium trioxide in the preparation method of the modified ternary material is 4.5 wt%.

### Embodiment 8

The embodiment provides a ternary and lithium manganese iron phosphate composite material, and the difference with Embodiment 1 is that titanium trioxide is replaced with titanium dioxide of equal mass in the preparation method of the modified lithium manganese iron phosphate material.

### Embodiment 9

The embodiment provides a ternary and lithium manganese iron phosphate composite material, and the difference with Embodiment 1 is that the addition amount of titanium trioxide in the preparation method of the modified lithium manganese iron phosphate material is 0.5 wt%.

### Embodiment 10

The embodiment provides a ternary and lithium manganese iron phosphate composite material, and the difference with Embodiment 1 is that the addition amount of titanium trioxide in the preparation method of the modified lithium manganese iron phosphate material is 4.5 wt%.

### Embodiment 11

The embodiment provides a ternary and lithium manganese iron phosphate composite material, and the difference with Embodiment 1 is that the preparation method of the ternary and lithium manganese iron phosphate composite material includes the following steps.

Mixing a ternary precursor and a lithium source, sintering at 800°C for 12h, and obtaining the modified ternary material after treatments of roller, jaw breaking, crushing, and demagnetization.

Mixing a lithium manganese iron phosphate precursor and lithium source, spray drying and then granulating, calcining at 750°C for 9h under inert gas atmosphere, and obtaining the modified lithium manganese iron phosphate material after treatments of crushing, sieving, and demagnetizing.

Mixing 2.5 wt% of titanium trioxide and the ternary material and lithium manganese iron phosphate material in a mass ratio of 3:7, and performing high-energy ball milling to obtain the modified ternary and lithium manganese iron phosphate composite material.

### Comparative Example 1

The present comparative example provides a ternary and lithium manganese iron phosphate composite material, and the difference with the embodiments is that titanium trioxide is not added in the preparation method.

The ternary and lithium manganese iron phosphate composite material obtained from the above is used to make a cathode slurry in accordance with ratios of cathode material:SP:CNT:PVDF=97:0.4:0.5:2.1, which is coated on a 12 µm carbon coated aluminum foil to obtain a cathode sheet; an anode slurry is made in accordance with ratios of graphite:SP:CMC:SBR=97:0.7:1.25:1.05, which is coated on an 8 µm copper foil to obtain an anode sheet. The diaphragm is adopted with a model of 9+2+1µm. The electrolyte is EC:DEC:EMC=4:3:3, the additives account for 10% of the total mass, of which VC:PS:FEC:CHB=3:2:1:1, and the concentration of lithium hexafluorophosphate in the electrolyte is 1 mol/L. The cathode and anode sheets and the diaphragm are wound or laminated to obtain a bare battery cell, which is placed in an outer aluminum-plastic film to be assembled into a 2Ah soft pack electric cell. The electrolyte is injected into the soft pack electric cell, and a soft pack lithium-ion battery is obtained, after treatments of aging, chemical formation, shaping, encapsulation and other processes, for testing.

The results are shown in Table 1.

**Table 1**

| Test No. | Capacity, mAh/g | Energy density, Wh/kg | 1C, 200-week cycling, capacity retention rate/% |
|---|---|---|---|
| Embodiment 1 | 158.0 | 200.0 | 98.5 |
| Embodiment 2 | 161.2 | 204.0 | 97.1 |
| Embodiment 3 | 159.6 | 202.0 | 97.6 |
| Embodiment 4 | 161.5 | 204.4 | 92.5 |
| Embodiment 5 | 156.9 | 198.6 | 93.8 |
| Embodiment 6 | 156.6 | 198.2 | 94.5 |
| Embodiment 7 | 156.4 | 197.9 | 94.9 |
| Embodiment 8 | 156.6 | 198.2 | 93.5 |
| Embodiment 9 | 157.3 | 199.1 | 95.1 |
| Embodiment 10 | 157.6 | 199.4 | 95.7 |
| Embodiment 11 | 155.9 | 197.3 | 93.8 |
| Comparative Example 1 | 156.2 | 197.7 | 93.2 |

The following conclusions are obtained from Table 1.
(1) From data of Embodiments 1-3 and Comparative Example 1, the ternary and lithium manganese iron phosphate composite material can contribute to a cathode material that takes into account the energy density and long-cycle performance; both the ternary material and the lithium manganese iron phosphate are modified by doping and cladding, which can make use of the synergistic effect of the doping and cladding to optimize the long-cycle performance of the cathode material; the ternary and lithium manganese iron phosphate composite material provided by the present disclosure has the gram capacity ≥ 158mAh/g, soft-pack energy density ≥200Wh/kg, and 1C cycle-200 weeks retention rate ≥97.0%.
(2) As can be seen from the comparison between Embodiment 4 and Embodiment 1, when the composite mass ratio of the modified ternary material and the modified lithium manganese iron phosphate material is not within the preferred range provided by the present disclosure, the resulting ternary and the lithium manganese iron phosphate composite material is not conducive to obtaining a cathode material that takes into account both the energy density and the long-cycle performance.
(3) As can be seen from the comparison between Embodiments 5-10 and Embodiment 1, when replacing titanium trioxide with other titanium sources, or when the addition amount of titanium trioxide is not within the preferred range provided by the present disclosure, it is not possible to realize the simultaneous modification of titanium doping and surface double-layer cladding by the one step of mixing and sintering, which affects the structure of the material from the surface to the interior and is unfavorable to the improvement of its cycling performance and energy density.
(4) As can be seen from the comparison between Embodiment 11 and Embodiment 1, when the composite is first carried out and then the cladding is carried out, the cladding layer is not uniform due to the close contact between the ternary material and the lithium manganese iron phosphate material, and the electrical properties of the material cannot be well improved.

In summary, the ternary and lithium manganese iron phosphate composite material in the present disclosure can contribute to a cathode material that takes into account the energy density and long-cycle performance; both the ternary material and the lithium manganese iron phosphate are modified by doping and cladding, which can make use of the synergistic effect of the doping and cladding to optimize the long-cycle performance of the cathode material.

## Claims

1. A modified ternary and lithium manganese iron phosphate composite material, comprising a modified ternary material and a modified lithium manganese iron phosphate material that are composite;
wherein the modified ternary material comprises a ternary material, a ternary material double-layer cladding layer, and ternary material doped metal ions; the ternary material double-layer cladding layer comprises a ternary material metal oxide layer and a ternary material cationic cladding layer;
the modified lithium manganese iron phosphate material comprises a lithium manganese iron phosphate material, a lithium manganese iron phosphate double-layer cladding layer, and lithium manganese iron phosphate doped metal ions; the lithium manganese iron phosphate double-layer cladding layer comprises a lithium manganese iron phosphate metal oxide layer and a lithium manganese iron phosphate cationic cladding layer.

2. The modified ternary and lithium manganese iron phosphate composite material according to claim 1, wherein a composite mass ratio of the modified ternary material and the modified lithium manganese iron phosphate material is (0~1):1 and is not zero;
preferably, a median particle size of the modified ternary and lithium manganese iron phosphate composite material is 2~15 µm.

3. The modified ternary and lithium manganese iron phosphate composite material according to claim 1 or 2, wherein a material of the ternary material metal oxide layer comprises titanium dioxide;
preferably, a material of the ternary material cationic cladding layer comprises lithium titanate;
preferably, the ternary material doped metal ions are titanium ions;
preferably, a thickness of the ternary material double-layer cladding layer is 6~10 nm;
preferably, a material of the lithium manganese iron phosphate metal oxide layer comprises titanium dioxide;
preferably, a material of the lithium manganese iron phosphate cationic cladding layer comprises lithium titanate;
preferably, the lithium manganese iron phosphate doped metal ions are titanium ions;
preferably, a thickness of the lithium manganese iron phosphate double-layer cladding layer is 6~10 nm.

4. A method for preparing the modified ternary and lithium manganese iron phosphate composite material according to any one of claims 1-3, comprising:
providing the modified ternary material and the modified lithium manganese iron phosphate material; and
mixing the modified ternary material and the modified lithium manganese iron phosphate material to obtain the modified ternary and lithium manganese iron phosphate composite material.

5. The method according to claim 4, wherein a preparation method of the modified ternary material comprises:
mixing a ternary precursor, a lithium source, and a titanium source, and sintering to obtain the modified ternary material;
preferably, a molar ratio of Ni:Co:Mn in the ternary precursor is 1:1:1~9.5:0.25:0.25;
preferably, the lithium source comprises any one or a combination of at least two of lithium hydroxide, lithium carbonate, lithium nitrate, or lithium acetate;
preferably, the titanium source comprises titanium trioxide;
preferably, a mass of the titanium source is 1~4 wt% of a mass of the ternary precursor;
preferably, a temperature of the sintering is 750~950°C;
preferably, a duration of the sintering is 10~15h;
preferably, the sintering is further followed by treatments of roller, jaw breaker, crushing, and demagnetization.

6. The method according to claim 4 or 5, wherein a preparation method of the modified lithium manganese iron phosphate material comprises:
mixing a lithium manganese iron phosphate precursor, a lithium source, and a titanium source, spray drying and granulating, calcining under a protective atmosphere, and obtaining the modified lithium manganese iron phosphate material;
preferably, the titanium source comprises titanium trioxide;
preferably, a mass of the titanium source is 1~4 wt% of a mass of the lithium manganese iron phosphate precursor;
preferably, the protective atmosphere is an inert gas atmosphere;
preferably, a temperature of the calcining is 700~800°C;
preferably, a duration of the calcining is 8~10h;
preferably, the calcining is further followed by treatments of crushing, sieving, and demagnetizing.

7. The method according to any one of claims 4-6, wherein a median particle size of the modified ternary material is 5~20 µm;
preferably, a median particle size of the modified lithium manganese iron phosphate material is 1~5 µm;
preferably, the mixing comprises high-energy ball milling;
preferably, a ball material ratio of the high-energy ball milling is (10~20):1;
preferably, a rotational speed of the high-energy ball milling is 1500~2000rpm;
preferably, a duration of the high-energy ball milling is 1~2h;
preferably, a mass ratio of the modified ternary material and the modified lithium manganese iron phosphate material is (0~1):1 and is not 0.

8. The method according to any one of claims 4-7, comprising:
mixing a ternary precursor, a lithium source, and titanium trioxide of 1~4wt% by mass of the ternary precursor, sintering at 750~950°C for 10∼15h, and obtaining the modified ternary material after treatments of roller, jaw breaking, crushing, and demagnetization;
mixing a lithium manganese iron phosphate precursor, a lithium source, and titanium trioxide of 1-4wt% by mass of the lithium manganese iron phosphate precursor, spray drying and granulating, calcining at 700~800°C for 8~10h under inert gas atmosphere, and obtaining the modified lithium manganese iron phosphate material after treatments of crushing, sieving, and demagnetizing; and
mixing the modified ternary material and the modified lithium manganese iron phosphate material in a mass ratio of (0~1):1 and not 0, performing a high-energy ball milling with a ball material ratio of (10~20):1 and at a rotational speed of 1500∼2000 rpm for 1-2h to obtain the modified ternary and lithium manganese iron phosphate composite material.

9. A cathode sheet, comprising the modified ternary and lithium manganese iron phosphate composite material according to any one of claims 1-3.

10. A battery, comprising the modified ternary and lithium manganese iron phosphate composite material according to any one of claims 1-3 or the cathode sheet according to claim 9.
